# EUROPÄISCHE PATENTSCHRIFT

(11) **EP 0 756 751 B1**
(45) Veröffentlichungstag und Bekanntmachung des Hinweises auf die Patenterteilung: **01.07.1998**
(21) Anmeldenummer: 95915767.8
(22) Anmeldetag: 10.04.1995
(51) Int. Cl.: H01H 3/32

(54) **LAGERANORDNUNG FÜR EINE SCHALTWELLE**
BEARING ARRANGEMENT FOR A SWITCH SHAFT
SYSTEME DE SUPPORT POUR ARBRE DE COMMANDE

(30) Priorität: 20.04.1994 DE 4416090
(43) Veröffentlichungstag der Anmeldung: 05.02.1997
(73) Patentinhaber: SIEMENS AKTIENGESELLSCHAFT, 80333 München (DE)
(72) Erfinder: GODESA, Ludvik, D-10777 Berlin (DE)
(86) Internationale Anmeldenummer: DE9500491
(87) Internationale Veröffentlichungsnummer: WO9529496

(56) Entgegenhaltungen:
- DE-A- 3 540 328
- US-A- 3 584 923
- US-A- 3 600 540

## Beschreibung

Die Erfindung betrifft eine Lageranordnung für die Schaltwelle eines mehrpoligen elektrischen Schaltgerätes mit einem Tragwerk, das aus in axialer Richtung der Schaltwelle hintereinander angeordneten, parallelen Wänden gebildet ist, wobei Wellenlager in zwei äußeren Wänden und zwei mittleren Wänden angeordnet sind, von denen die mittleren Wände eine randseitig offene Ausnehmung besitzen.

Eine Lageranordnung dieser Art ist beispielsweise durch die US-A-3 600 540 bekannt geworden. Da somit insgesamt vier Wellenlager vorhanden sind, bereitet es Schwierigkeiten, diese Wellenlager fluchtend auszurichten. Ein größeres radiales Spiel zum Ausgleich einer Fluchtungstoleranz ist andererseits nicht anwendbar, weil diese Maßnahme weder die geforderte Präzision des Schaltvorganges noch eine ausreichende Lebensdauer der Schaltwelle ermöglichen würde.

Der Erfindung liegt die Aufgabe zugrunde, eine besonders für die mittleren Wände geeignete und leicht montierbare Lageranordnung zu schaffen.

Gemäß der Erfindung wird diese Aufgabe gelöst durch folgende weitere Merkmale:
- wenigstens die Wellenlager in den mittleren Wänden weisen zwei Halbschalen auf, die an ihrem äußeren Umfang mit einer Nut versehen sind,
- die randseitig offenen Ausnehmungen in den betreffenden Wänden des Tragwerkes weisen je eine Begrenzungskante mit dem Radius und der Breite der Nut auf, die sich nur über einen Teil des Umfanges der Ausnehmung erstreckt wobei der verbleibende Teil der Ausnehmung eine Begrenzungskante mit dem Außendurchmesser der Halbschalen besitzt, und
- jeweils eine der Halbschalen ist durch ein an der zugeordneten Wand zu befestigendes Sperrstück abstützbar, das eine der Nut angepaßte Ausnehmung aufweist, wobei das Sperrstück wenigstens eine Anschlagfläche für die von dem Sperrstück nicht erfaßte Halbschale besitzt.

Diese Anordnung gestattet es, die vollständig fertiggestellte Schaltwelle in die Ausnehmungen einzulegen und die Wellenlager zu montieren. Dies kann etwa in der Weise geschehen, daß die eine Halbschale des Wellenlagers auf die freiliegende Seite der Welle aufgelegt und dann durch Drehung der Halbschale der Eingriff der Nut mit der Begrenzungskante hergestellt wird. Nach Einbringen einer weiteren Halbschale genügt nun die Anbringung des erwähnten Sperrstückes, um das Wellenlager endgültig zu befestigen.

Für die Anordnung nach der Erfindung ist es wesentlich, daß sich die Begrenzungskante nur über einen Teil des Umfanges der Ausnehmung erstreckt und daß der verbleibende Teil der Ausnehmung eine Begrenzungskante mit dem Außendurchmesser der Halbschale besitzt. Dies erlaubt die Bildung des vollständigen Wellenlagers durch seitliche Verschiebung der zweiten Halbschale auf der Welle soweit, daß ihr Umfang zur Anlage an dem erweiterten Bereich der Ausnehmung gelangt. Hierdurch ergibt sich im fertig montierten Zustand des Wellenlagers ein Versatz um etwa die Breite der erwähnten Nut.

Die Erfindung unterscheidet sich durch ihren geringen Raumbedarf für Anordnung und Montage eines Wellenlagers vorteilhaft von einer Lageranordnung, wie sie in der US 3 584 923 A beschrieben ist. Hierbei können entweder geschlossene Lagerbuchsen in randseitig offenen Ausnehmungen einer Wand mittels einer Sperrklammer festgesetzt werden oder Halbschalen in eine geschlossene Ausnehmung einer Wand eingesetzt werden, wobei die Ausnehmung in der einen Richtung etwa den doppelten Durchmesser der Lageranordnung aufweist. Hiermit ist die erläuterte Aufgabe bei einem elektrischen Schaltgerät der erwähnten Art nicht lösbar.

Durch die Erfindung wird die Möglichkeit geschaffen, unter sehr beengten räumlichen Bedingungen ein Wellenlager mit hoher Tragkraft nahe demjenigen Bereich der Schaltwelle anzubringen, in dem die Hauptantriebskraft in die Schaltwelle eingeleitet wird. Die gleiche Anordnung kann auch zusätzlich an den Enden der Schaltwelle im Bereich der äußeren Wände des Tragwerkes vorgesehen werden. Es erweist sich jedoch als ausreichend, die Enden der Schaltwelle nur durch je eine in die zugeordnete äußere Wand eingesetzte Halbschale in der Richtung der auftretenden Gegenkraft abzustützen. Diese Anordnung erleichtert auch die Einhaltung einer zu fordernden Fluchtungstoleranz.

Die Erfindung wird im folgenden anhand des in den Figuren dargestellten Ausführungsbeispieles näher erläutert.

Die Figur 1 zeigt eine Schaltwelle für einen vierpoligen Niederspannungs-Leistungsschalter mit mehreren Wellenlagern.

Die Figur 2 zeigt eine Ansicht eines mittleren Wellenlagers mit geschnittener Schaltwelle.

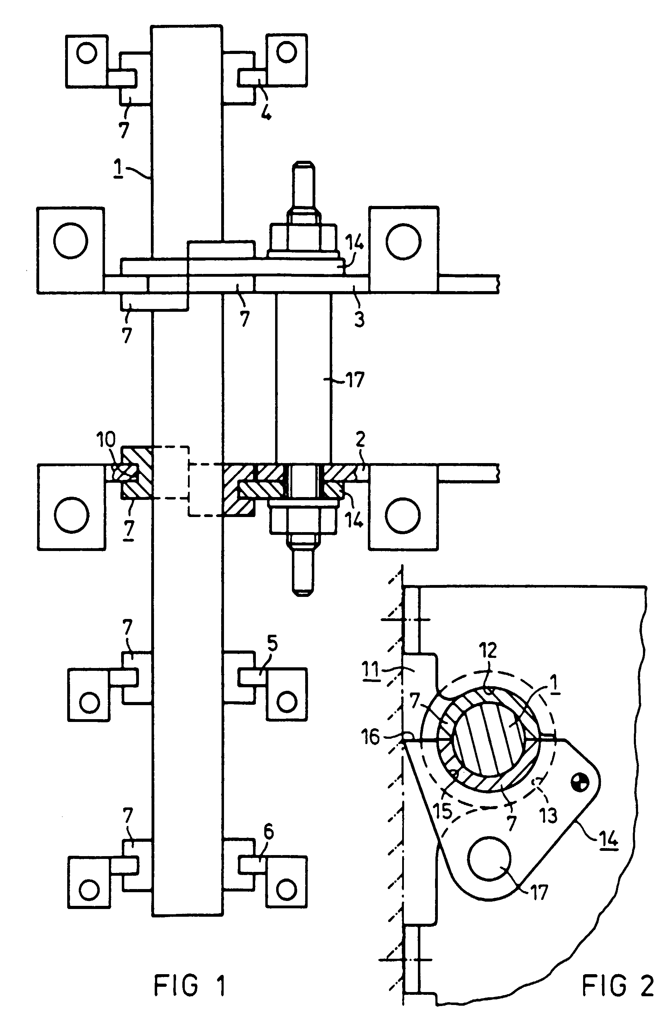

Die Schaltwelle 1 gemäß den Figuren 1 und 2 ist in dem Tragwerk eines Niederspannungs-Leistungsschalters gelagert, das zwei mittlere Wände 2 und 3 sowie äußere Wände 4, 5 und 6 umfaßt. Diese Wände sind parallel zueinander angeordnet und in geeigneter Weise verbunden, beispielsweise durch Querträger oder durch Verbindung mit anderen Baugruppen des Leistungsschalters. Die mittleren Wände 2 und 3 nehmen zwischen sich eine Antriebsvorrichtung auf, zu der neben einem Federspeicher eine Hebelanordnung zur Übertragung der Kraft des Federspeichers auf die Schaltwelle gehört. Mit Rücksicht darauf, daß derartige Federspeicher und Hebelanordnungen bei Leistungsschaltern der hier betrachteten Art bekannt sind, wird davon abgesehen, nähere Einzelheiten der Krafteinleitung in die Schaltwelle 1 darzustellen. Gleichfalls fortgelassen sind zur Verbindung der Schaltwelle 1 mit den Schaltkontaktanordnungen der einzelnen Pole dienende Hebelanordnungen.

Die Wellenlager der Schaltwelle 1 bestehen aus je zwei Halbschalen 7, die eine Nut 10 an ihrem äußeren Umfang aufweisen. Ferner sind die Wände 2 und 3 mit je einer Ausnehmung 11 versehen, die randseitig offen ist und das Einlegen der Schaltwelle 1 sowie die nachträgliche Anbringung der Halbschalen 7 gestattet. Hierzu weist die Ausnehmung 11 eine Begrenzungskante 12 mit einem der Nut 10 entsprechenden Radius und eine weitere Begrenzungskante 13 mit dem Radius des äußeren Umfanges der Halbschalen 7 auf.

Die Montage der Wellenlager wird mit folgenden Schritten durchgeführt:
Zunächst wird die Schaltwelle 1 in die Ausnehmung 11 von der Seite her eingeführt. Dann wird eine der Halbschalen 7 auf die Welle seitlich einer der Wände 2 bzw. 3 aufgelegt und im Bereich der erweiterten Begrenzungskante 13 soweit verschoben, bis die Nut 10 dem Beginn der engeren Begrenzungskante 12 gegenübersteht. Ausgehend von dieser Lage kann nun die Halbschale 7 in Umfangsrichtung auf der Welle gedreht werden, bis die Begrenzungskante 12 vollständig in die Nut der betreffenden Halbschale 7 eintaucht. In diesem Zustand ist die erweiterte Begrenzungskante 13 der Ausnehmung 11 wieder zugänglich, so daß nun die zweite Halbschale 7, gleichfalls durch Auflegen auf die Schaltwelle 1 und seitliche Verschiebung, in den Bereich der Begrenzungskante 13 gebracht werden kann. Zur Festlegung der zweiten Halbschale 7 in dieser Stellung dient ein gabelartiges Sperrstück 14, das eine halbkreisförmige Ausnehmung 15 mit einem Radius entsprechend der Nut 10 besitzt. Die Endkanten 16 des Sperrstückes 14 bilden dabei Anschlagflächen für die zuerst eingesetzte Halbschale 7, so daß nun die Halbschalen befestigt und gegen Verdrehung gesichert sind. Wie die Figur 1 zeigt, sind die beiden Halbschalen 7 eines Wellenlagers um die Dicke der Wand 2 bzw. 3 gegeneinander versetzt. Dies ist für die Eigenschaften des Wellenlagers ebensowenig von Bedeutung wie das Vorhandensein eines Spaltes zwischen den Halbschalen, weil die Schaltwelle 1 keine kontinuierliche Drehbewegung, sondern lediglich ruckartige kurze Drehungen ausführt.

Wie die Figur 1 noch zeigt, werden die Sperrstücke 14 an einem Verbindungsbolzen 17 befestigt, der die beiden Wände 2 und 3 durchsetzt. Hierdurch ist eine sichere Abstützung und gute Kraftübertragung gewährleistet. In den weiteren Wänden 4, 5 und 6 können gleiche Wellenlager angeordnet sein. Es kann jedoch ausreichend sein, jeweils nur eine Halbschale 7 zu verwenden und diese so anzuordnen, daß die von dem jeweils zugeordneten Pol des Leistungsschalters ausgeübte Gegenkraft abgefangen wird. Dies erleichtert gleichermaßen die Einhaltung der zu fordernden Toleranz als auch die Montage.

Das beschriebene Prinzip, die Wellenlager so nahe wie möglich an der Einleitungsstelle der Antriebskraft anzuordnen, ist unabhängig von der Zahl der Pole eines Schaltgerätes anwendbar. Daher ist die Baugruppe, welche die mittleren Wände 2 und 3 umfaßt, beispielsweise auch bei dreipoligen Leistungsschaltern verwendbar.

## Patentansprüche

1. Lageranordnung für die Schaltwelle (1) eines mehrpoligen elektrischen Schaltgerätes mit einem Tragwerk, das aus in axialer Richtung der Schaltwelle (1) hintereinander angeordneten, parallelen Wänden (2, 3, 4, 5, 6) gebildet ist, wobei Wellenlager in zwei äußeren und zwei mittleren Wänden (2, 3, 4, 5, 6) angeordnet sind, von denen die mittleren Wände (2, 3) eine randseitig offene Ausnehmung (11) besitzen,
**gekennzeichnet durch** folgende weitere Merkmale:
- wenigstens die Wellenlager in den mittleren Wänden (2, 3) weisen zwei Halbschalen (7) auf, die an ihrem äußeren Umfang mit einer Nut (10) versehen sind,
- die randseitig offenen Ausnehmungen (11) in den betreffenden Wänden (2, 3) des Tragwerkes weisen je eine Begrenzungskante (12) mit dem Radius und der Breite der Nut (10) auf, die sich nur über einen Teil des Umfanges der Ausnehmung (11), erstreckt wobei der verbleibende Teil der Ausnehmung (11) eine Begrenzungskante (13) mit dem Außendurchmesser der Halbschalen (7) besitzt, und
- jeweils eine der Halbschalen (7) ist durch ein an der zugeordneten Wand (2, 5) zu befestigendes Sperrstück (14) abstützbar, das eine der Nut (10) angepaßte Ausnehmung (15) aufweist, wobei das Sperrstück (14) wenigstens eine Anschlagfläche (16) für die von dem Sperrstück (14) nicht erfaßte Halbschale (7) besitzt.

2. Lageranordnung nach Anspruch 1,
**dadurch gekennzeichnet**, daß die Enden der Schaltwelle (1) durch je eine in die zugeordnete äußere Wand (4, 5, 6) eingesetzte Halbschale nur in der Richtung der auftretenden Gegenkraft abgestützt sind.

## Claims

1. Bearing arrangement for the switch shaft (1) of a multi-pole electrical switching device with a supporting framework which is formed from parallel walls (2, 3, 4, 5, 6) arranged one behind the other in the axial direction of the switch shaft (1), with shaft bearings being arranged in two outer and two middle walls (2, 3, 4, 5, 6), of which the middle walls (2, 3) have a recess (11) open at the edge, characterized by the following additional features:
- at least the shaft bearings in the middle walls (2, 3) have two shells (7) which are provided with a groove (10) on their outer circumference,
- the recesses (11) open at the edge in the relevant walls (2, 3) of the supporting framework have a respective limiting edge (12) with the radius and the width of the groove (10), which limiting edge only extends over a part of the circumference of the recess (11), with the remaining part of the recess (11) having a limiting edge (13) with the outer diameter of the shells (7), and
- in each case one of the shells (7) can be supported by a stopping part (14) to be fastened to the allocated wall (2, 5), the stopping part having a recess (15) adapted to the groove (10), with the stopping part (14) having at least one stopping face (16) for the shell (7) which is not taken up by the stopping part (14).

2. Bearing arrangement according to claim 1, characterized in that the ends of the switch shaft (1) are supported only in the direction of the occurring opposing force by a respective shell inserted into the allocated outer wall (4, 5, 6).

## Revendications

1. Ensemble de palier pour l'arbre de commande (1) d'un appareil de commutation électrique multipolaire, comprenant une ossature porteuse qui est formée de cloisons parallèles (2, 3, 4, 5, 6) disposées les unes à la suite des autres dans la direction axiale de l'arbre de commande (1), des paliers d'arbre étant disposés dans deux cloisons extérieures et deux cloisons intermédiaires (2, 3, 4, 5, 6), les cloisons intermédiaires (2, 3) possédant un évidemment ouvert (11) sur leur bord,
**caractérisé** par les caractéristiques supplémentaires suivantes :
- au moins les paliers d'arbre dans les cloisons intermédiaires (2, 3) présentent deux demi-coques (7) qui sont pourvues d'une rainure (10) sur leur périphérie extérieure,
- les évidements ouverts (11) sur le bord des cloisons concernées (2, 3) de l'ossature porteuse présentent chacun une arête de délimitation (12) ayant le rayon et la largeur de la rainure (10), arête qui ne s'étend que sur une partie de la périphérie de l'évidement (11), la partie résiduelle de l'évidement (11) possédant une arête de délimitation (13) ayant le diamètre extérieur des demi-coques (7), et
- une des demi-coques (7) peut chaque fois être soutenue par un élément de verrouillage (14) à fixer sur la cloison associée (2, 5), élément qui présente un évidemment (15) adapté à la rainure (10), l'élément de verrouillage (14) possédant au moins une face de butée (16) pour la demi-coque (7) qui n'est pas embrassée par l'élément de verrouillage (14).

2. Ensemble de palier selon la revendication 1,
**caractérisé** en ce que les extrémités de l'arbre de commande (1) ne sont soutenues, par une demi-coque respective insérée dans la cloison extérieure associée (4, 5, 6), que dans la direction de la force antagoniste rencontrée.
